# EUROPÄISCHE PATENTSCHRIFT

(11) **EP 2 095 938 B1**
(45) Veröffentlichungstag und Bekanntmachung des Hinweises auf die Patenterteilung: **22.04.2015**
(21) Anmeldenummer: 08003825.0
(22) Anmeldetag: 29.02.2008
(51) Int. Cl.: B32B 1/08, F16L 59/14

(54) **Formaldehydfreie Rohrisolierung**
Formaldehyde-free pipe insulation
Isolation de tuyau sans formaldéhyde

(43) Veröffentlichungstag der Anmeldung: 02.09.2009
(73) Patentinhaber: G+H Marine GmbH, 22113 Hamburg (DE)
(72) Erfinder: Bahde, Thorsten, 22844 Norderstedt (DE); Schneider, Mirko, 22089 Hamburg (DE); Timm, Kay, 22529 Hamburg (DE)
(74) Vertreter: Grünecker Patent- und Rechtsanwälte PartG mbB

(56) Entgegenhaltungen:
- WO-A-99/09346
- DE-A1- 19 831 752
- US-A- 3 053 715
- US-A- 5 985 385
- US-A1- 2005 155 663

## Beschreibung

Die Erfindung betrifft eine Rohrisolierung, insbesondere für heiße Abgasrohre.

Aus der US 2005/0155663 A1 ist bereits eine Pipelineisolierung bekannt, die einen komplexen Schichtaufbau zeigt und die nicht das Minimieren der Emission von Formaldehyd betrifft. Diese Druckschrift lehrt den Einsatz von organischen Materialien wie Phenolschaum sowie Polyurethanschaum. Diese Druckschrift zeigt nicht den Aufbau einer Rohrisolierung mit einer flexiblen Filzmatte, die ein- oder mehrlagig um das Rohr gelegt wird und aus anorganischen Fasern gebildet ist und eine über dieser Filzmatte angeordneten, für Wasser und Öl impermeablen Metallfolie und eine über der Folie angeordnete Gewebeschicht mit einem Glühverlust < 0,5 %.

Die Druckschrift US-A-3 053 715 zeigt Rohrisolierungen aus Fasern mit einer Zwischenschicht aus Fasern. Diese Druckschrift beschreibt auch den Einsatz von organischen Substanzen wie beispielsweise Phenolharz. Diese Druckschrift zeigt nicht den Aufbau einer Filzmatte gefolgt von einer impermeablen Folie und einer Gewebeschicht mit einem Glühverlust < 0,5 %, vorzugsweise < 1 %.

Die Druckschrift US-A-5 985 385 zeigt eine Kombination aus einer Faserschicht und einer Metallfolie, die über einer inneren Schicht angeordnet sind. Diese Druckschrift beschreibt die Verwendung von Bindemitteln. Diese Druckschrift zeigt keine Filzmatte, die ein- oder mehrlagig um das Rohr gelegt ist und auch keine Gewebeschicht über einer Metallfolie, deren Glühverlust < 0,5, vorzugsweise 0,1 % ist.

Isolierungen von Rohrleitungen sind seit langem bekannt. Hierfür gibt es unterschiedliche Varianten. Weit verbreitet sind Isolierungen mit einer ersten Schicht aus Mineralwolle (Glas- oder Steinwolle), die entweder mit einer Alukaschierung oder mit einem Blechmantel versehen sind. Auch sind Ausführungen bekannt, die zusätzlich zur Alukaschierung eine äußere Schicht aus einem Gewebe aus Glas oder anderen Stoffen aufweisen.

Aufgrund der toxischen Relevanz von Formaldehyd wird zunehmend Wert darauf gelegt, dass sich in den für die Isolierung verwendeten Stoffen kein Formaldehyd befindet. Aus diesem Grund werden Mineralwolleisolierungen zunehmend mit Klebern hergestellt, die formaldehydfrei sind.

Die Standardtestverfahren zur qualitativen und quantitativen Analyse von Formaldehyd mittels Nash oder HPLC werden bei niedrigen Temperaturen wie etwa 40 bis 60 ° durchgeführt. Andere

Angaben zur Formaldehydfreiheit beziehen sich überwiegend auf die Freisetzung von Formaldehyd während der Herstellungsphase (Trocknung, Aushärtung etc.) und werden hauptsächlich bei z.B. 40 °C getestet. Das bedeutet aber, dass die "formaldehydfreien Isolierungen" nur für Kälteleitungen als formaldehydfrei betrachtet werden können. Bislang wurde jedoch davon ausgegangen, dass diese "formaldehydfreien" Isolierungen für alle Rohrleitungssysteme geeignet sind.

Die obengenannten Kleber, die wie zuvor beschrieben getestet und als formaldehydfrei deklariert werden oder bei der Herstellung kein Formaldehyd freisetzen, haben allerdings Glühverluste von über 50 %, was auf einen großen Anteil flüchtiger Bestandteile hinweist, die bei Temperaturen über 250 °C beginnen sich zu zersetzen und Umwandlungsprodukte zu erzeugen. Bei der thermischen Zersetzung dieser organischen Bestandteile wird jedoch auch Formaldehyd, zum Teil in hohen Konzentrationen, freigesetzt. Bei Abgasrohrleitungen, die Temperaturen über 400 °C erreichen, konnten somit hohe Konzentrationen an Formaldehyd nachgewiesen werden. Dies wird bestätigt durch Angaben zur Zusammensetzung von formaldehydfreien Klebern, die beispielsweise Harze, Harnstoffe etc. umfassen.

Der Einsatz von sogenannten formaldehydfreien Klebern wurde bei hohen Temperaturen bislang nicht untersucht und berücksichtigt.

Für die Isolierung von Abgasrohren gibt es verschiedene Ansätze, die allerdings allesamt keine Aussage zur Freisetzung von Formaldehyd machen und im Wesentlichen einen engen Verbund mit dem Rohr bilden. Die Demontage dieser Isolierung ist in der Regel schwierig bis unmöglich, und mit hohem Aufwand verbunden. Bei Verwendung von Steinwolle ohne/mit äußerer Abdeckung wird bei den gängigen Systemen bei hohen Temperaturen Formaldehyd als Umwandlungsprodukt erzeugt und freigesetzt.

Hiervon ausgehend liegt der vorliegenden Erfindung die Aufgabe zugrunde, eine Rohrisolierung, bereitzustellen, die auch bei hohen Temperaturen kein Formaldehyd freisetzt, also ständig formaldehydfrei bezeichnet werden kann und darüber hinaus zu Revisionszwecken problemlos demontiert und danach auch wieder neu montiert werden kann.

Erfindungsgemäß wird diese Aufgabe durch die Merkmale des Anspruchs 1 gelöst. Gemäß der vorliegenden Erfindung weist die Rohrisolierung eine flexible Filzmatte auf. Die Verwendung einer Filzmatte bringt den Vorteil mit sich, dass der Filz ohne organische Bindemittel auf einfache Art und Weise, beispielsweise durch Vernadeln, oder Behandlung mit einem gepulsten Wasserstrahl etc. möglich ist. Die Filzmatte ist frei von organischen Bindemitteln und ist darüber hinaus vorzugsweise aus anorganischen Fasern, wie z.B. aus Erdalkali-Silikatfasern gebildet. Da die Filzmatte keine organischen Kleber oder Bindemittel aufeist, kann sie auch auf hohe Temperaturen aufgeheizt werden, ohne dass sich Formaldehyd als thermisches Zersetzungsprodukt bildet. Eine Filzmatte kann darüber hinaus einfach gehandhabt und ein- oder mehrlagig um das Abgasrohr gelegt werden und auf einfache Art und Weise beispielsweise durch Vernähen befestigt werden. Über der Filzmatte ist gemäß der vorliegenden Erfindung dann eine für Feuchtigkeit und Öle impermeable Folie vorgesehen. Schließlich ist über dieser impermeablen Folie eine Gewebeschicht gelegt und befestigt.

Die so aufgebaute Rohrisolierung setzt auch bei höheren Temperaturen kein Formaldehyd frei und kann einfach und problemlos zu Revisionszwecken demontiert und danach wieder neu montiert werden.

Die Gewebeschicht weist dabei einen Glühverlust von kleiner 0,5 %, vorzugsweise kleiner 0,1 % auf und ist somit nahezu frei von flüchtigen Bestandteilen. Eine thermische Zersetzung und eine Bildung von Formaldehyd kann somit verhindert werden, was durch Laborversuche bestätigt wurde. Vorteilhafterweise ist die Gewebeschicht ein Glasfasergewebe. Als impermeable Folie ist insbesondere eine Alufolie geeignet, die vorzugsweise eine Stärke im Bereich von 0,03 bis 0,1 mm aufweist. Eine solche Aluminiumfolie schützt wirksam gegen das Eindringen von Feuchtigkeit, Ölen oder anderen schädlichen Stoffen.

Es ist möglich, dass die Gewebeschicht und die impermeable Folie vor der Montage mittels formaldehydfreiem Kleber verklebt werden. Die Klebeschicht ist so aufgebildet, dass sie auch bei hoher Temperatur kein Formaldehyd freisetzt.

Alternativ zur Verwendung eines Klebers kann über die impermeable Folie eine Drahtgaze gelegt werden. Eine solche Gaze bietet einen zusätzlichen Schutz und ermöglich ein leichteres Auflegen der Gewebeschicht. Wenn anstelle des Klebers die Drahtgaze verwendet wird, kann die Emission an Zersetzungsprodukten noch weiter reduziert werden.

An einer Rohrverbindung zwischen einem ersten und einem zweiten Rohr ist eine erste Rohrisolierung um das erste Rohr und eine zweite Rohrisolierung um das zweite Rohr, beabstandet zum ersten Rohr, angeordnet. Um auch den Verbindungsabschnitt ausreichend zu isolieren ist um die erste und die zweite Rohrisolierung herum eine dritte Rohrisolierung angeordnet. Eine solche Isolierung einer Anschlussstelle ist einfach zu realisieren und kann auch einfach wieder demontiert werden.

Insbesondere wird die erfindungsgemäße Rohrisolierung für Abgasrohre verwendet, die Temperaturen über 400 °C erreichen.

Die vorliegende Erfindung wird nachfolgend unter Bezugnahme der folgenden Figuren näher erläutert.
- Fig. 1: zeigt einen schematischen Querschnitt einer Rohrisolierung gemäß der vorliegenden Erfindung.
- Fig. 2: zeigt einen Längsschnitt durch die in Fig. 1 gezeigten Isolierung entlang der Linie I-I.
- Fig. 3: zeigt schematisch einen Längsschnitt der Rohrisolierung an einer Verbindungsstelle von zwei Rohren.

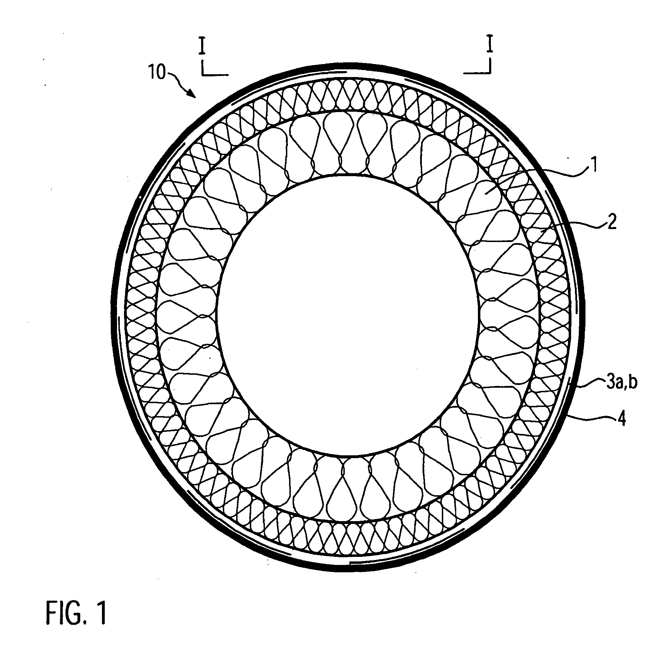

Fig. 1 zeigt einen Querschnitt durch eine Rohrisolierung 10 gemäß der vorliegenden Erfindung. Die Rohrisolierung 10 umgibt ein Rohr 5, insbesondere ein Abgasrohr 5, das Temperaturen über 400 °C erreicht.

Die Rohrisolierung 10 umfasst eine flexible Filzmatte 1, die ein- oder mehrlagig um das Rohr 5 gelegt und beispielsweise durch Vernähen befestigt wird. Diese Matte ist flexibel, so dass sie auf einfache Art und Weise um das Rohr 5 gelegt werden kann und dicht anliegt. Eine solche Filzmatte kann einfach und sauber gehandhabt werden. Die Filzmatte 1 ist derart hergestellt, dass auch bei hohen Temperaturen keine Emission von Formaldehyd nachweisbar ist. Die Filzmatte 1 ist z.B. aus anorganischen Fasern, vorzugsweise aus Erdalkali-Silikatfasern gefertigt. Da es sich bei der Matte 1 um eine Filzmatte handelt, kann dieses Material ohne Bindemittel und insbesondere frei von organischen Bindemitteln gefertigt werden. Die Filzmatte kann auf einfache Art und Weise durch Vernadeln hergestellt werden, wobei durch wiederholtes Einstechen von zahlreichen Nadeln mit Widerhaken die Fasern miteinander verschlungen werden können. Auch das Verhaken mit einem gepulster Wasserstrahl ist möglich. Die Filzmatte weist je nach Anwendung eine Dicke von 30 bis 300 mm auf.

Über der Filzmatte 1 ist ein- oder mehrlagig eine impermeable Folie 2 aufgelegt bzw. gewickelt. Die Folie ist insbesondere impermeabel für Feuchtigkeit, Wasser und Öle. Die impermeable Folie 2 ist eine dünne Metallfolie z.B. eine Aluminiumfolie 2, die eine Schichtdicke in einem Bereich von 0,03 bis 0,1 mm aufweist.

Als Außen- bzw. Schlussschicht wird um die impermeable Folie 2 ein- oder mehrlagig eine Gewebeschicht 4 gewickelt, die hier aus einer Glasfasergewebeschicht gebildet ist. Das Glasfasergewebe besteht z.B. aus verschlungenen Glasfasern, wobei Glasfasern Fasern sind, die durch Ziehen, Schleudern oder Blasen aus aufgeschmolzenem Rohglas hergestellt werden. Die Gewebeschicht 4 ist ebenfalls flexibel und ist derart gefertigt, dass sie nahezu frei von flüchtigen Bestandteilen ist. Die Gewebeschicht ist so gefertigt, dass sie durch eine spezielle Behandlung einen Glühverlust von kleiner 0,5 % vorzugsweise kleiner 0,1 % aufweist. Unter Glühverlust (in %) versteht man den Anteil an organischer Substanz einer Probe. Um ihn zu bestimmen wird z.B. die Probe bei Temperaturen von über 500 °C in einem Ofen solange geglüht, bis keine Gewichtsabnahme mehr festzustellen ist. Die Differenz zwischen der aufgegebenen Gesamtmasse und dem Glührückstand bildet den Glühverlust. Ein hoher Glühverlust deutet auf einen hohen Anteil an organischer Substanz hin. Ist also der Glühverlust sehr gering, so kann davon ausgegangen werden, dass bei hohen Rohrtemperaturen keine thermische Umsetzung und damit keine Bildung von Formaldehyd zu erwarten ist. Dies hat sich in Laborversuchen bestätigt. Bei der Herstellung der Gewebeschicht wird diese karamillisiert, d.h. das Glasgewebe wird eine bestimmte Zeit, z. B. ca. 60 Sekunden mit mindestens 400 °C belastet, derart, dass organische Bestandteile, und insbesondere Silikonölrückstände verbrennen, wodurch der Glühverlust reduziert werden kann.

Die Stärke der Gewebeschicht 4 liegt in einem Bereich von 0,6 bis 1,0 mm. Die Gewebeschicht 4 wird beispielsweise durch Vernähen oder Verkleben befestigt. Diese Klebeschicht ist so ausgebildet, dass auch von dieser im Falle einer hohen Temperatur (größer 400 °C) kein Formaldehyd freigesetzt wird.

Aus Gründen der einfacheren Montage kann es sinnvoll sein, die Folie 2, hier die Aluminiumfolie mit der Gewebeschicht 4 vor der Montage zu verkleben. Diese Klebeschicht 3a, wenn ausgeführt, ist so ausgebildet, dass auch von dieser im Falle einer hohen Temperatur (größer 400 °C) kein Formaldehyd freigesetzt wird.

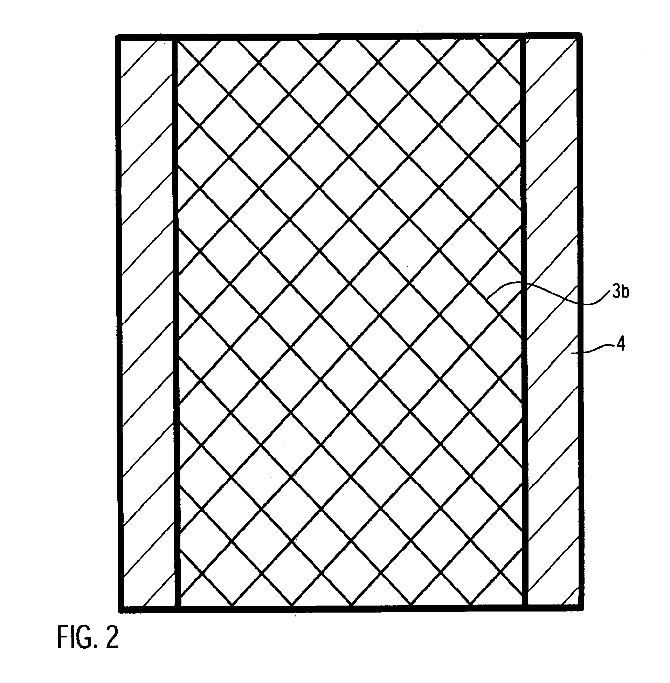

Alternativ dazu kann auf eine Verklebung auch verzichtet werden. Dann kann eine Drahtgaze 3b über die bereits um das Rohr gewickelte Aluminiumfolie 2 gelegt werden, um einen zusätzlichen Schutz und ein leichteres Auflegen des Gewebes 4 zu ermöglichen. Die Drahtgaze 3 ist ein flexibles dünnes Gespinst aus Drähten einer Stärke von 0,1 bis 0,2 mm. Die Drahtgaze kann entweder um die Folie 2 herumgelegt und durch Draht befestigt werden oder beispielsweise wie ein flexibler Strumpf bzw. Schlauch um die Folie 2 auf das Rohr gezogen werden. Die Verwendung der Drahtgaze 3b ist besonders vorteilhaft, da die Gaze frei von organischen Bestandteilen gefertigt werden kann. Fig. 2 zeigt einen Längsschnitt durch die in Fig. 1 gezeigte Isolierung entlang der Linie I-I und zeigt hier grob schematisch die Gaze 3b, sowie die Gewebeschicht 4. Als Draht für die Drahtgaze 3 eignet sich insbesondere, ein Werkstoff mit hohem Schmelzpunkt (> 800 °C), wie etwa 1,4841.

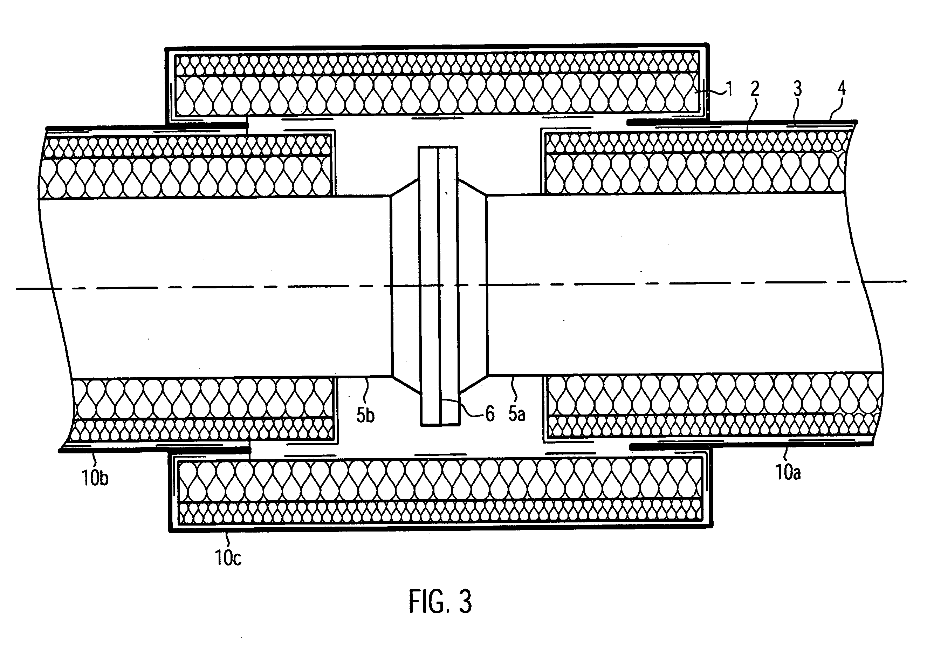

Fig. 3 zeigt grob schematisch einen Längsschnitt durch eine Rohrisolierung an einer Rohrverbindung 6 zweier Rohre 5a und 5b. An dem ersten Rohr 5a ist eine erste Rohrisolierung 10a vorgesehen, die wie zuvor beschrieben aufgebaut ist. Eine entsprechende Rohrisolierung 10b ist um das zweite Rohr 5b montiert. Die beiden Rohrisolierungen 10a, b sind voneinander beabstandet, wobei hier der Rohrflansch zwischen den Isolierungen liegt. Um auch den Anschlussbereich zwischen den Rohren 5a, b ausreichend zu isolieren, wird eine dritte Rohrisolierung 10c um die erste und zweite Rohrisolierung 10a, b herum angeordnet. Auch die Isolierung 10c entspricht der zuvor beschriebenen Rohrisolierung. Die in Fig. 3 gezeigte Rohrisolierung erlaubt eine einfache Demontage zu Revisionszwecken, wobei auf einfache Art und Weise die dritte Isolierung 10c entfernt wird, um beispielsweise an die Rohrverbindung 6 zu gelangen.

Gemäß der vorliegenden Erfindung wird somit eine Rohrisolierung 10 bereitgestellt, die auch bei hohen Temperaturen (größer 400 °C) eingesetzt werden kann, ohne dass Formaldehyd emittiert wird. Die Rohrisolierung kann einfach befestigt und auch einfach demontiert werden.

## Patentansprüche

1. Rohrisolierung (10), insbesondere für heiße Abgasrohre (5), umfassend:
- eine flexible Filzmatte (1), die ein- oder mehrlagig um das Rohr (5) gelegt wird und aus anorganischen Fasern gebildet ist,
- eine über der Filzmatte (1) angeordnete für Feuchtigkeit, Wasser und Öle impermeable dünne Metallfolie (2) deren Stärke in einem Bereich von 0,03 bis 0,1 mm liegt und
- eine über der impermeablen Folie (2) angeordnete Gewebeschicht (4), die ein Glasfasergewebe ist,
wobei die Gewebeschicht (4) einen Glühverlust von kleiner 0,5 % vorzugsweise kleiner 0,1 % aufweist.

2. Rohrisolierung nach Anspruch 1, **dadurch gekennzeichnet, dass** die Filzmatte (1) aus Erdalkali-Silikatfasern gebildet ist.

3. Rohrisolierung nach mindestens einem der Ansprüche 1 bis 2, **dadurch gekennzeichnet, dass** die impermeable Folie (2) eine Alufolie ist.

4. Rohrisolierung nach mindestens einem der Ansprüche 1 bis 3, **dadurch gekennzeichnet, dass** die Gewebeschicht (4) und die impermeable Folie (2) vor Montage mittels formaldehydfreiem Kleber (3a) verklebt sind.

5. Rohrisolierung nach mindestens einem der Ansprüche 1 bis 4, **dadurch gekennzeichnet, dass** über die impermeable Folie (2) eine Drahtgaze (3b) gelegt wird.

6. Rohrisolierung nach mindestens einem der Ansprüche 1 bis 5, **dadurch gekennzeichnet, dass** an einer Rohrverbindung zwischen einem ersten Rohr (5a) und einem zweiten Rohr (5b) eine erste Rohrisolierung (10a) um das erste Rohr (5a) und eine zweite Rohrisolierung (10b) um das zweite Rohr (5b), beabstandet zur ersten Rohrisolierung angeordnet ist, und um die erste und zweite Rohrisolierung (10a, b) eine dritte Rohrisolierung (10c) angeordnet ist.

7. Verwendung einer Rohrisolierung nach mindestens einem der Ansprüche 1 bis 6 für Abgasrohre (5), die Temperaturen über 400 °C erreichen.

8. Rohr (5), insbesondere Abgasrohr, mit einer Rohrisolierung (10) nach mindestens einem der Ansprüche 1-7.

## Claims

1. Pipe insulation (10), in particular for hot exhaust pipes (5), comprising:
- a flexible felt mat (1) which is placed around the pipe (5) in one or more layers and is formed of inorganic fibres,
- a thin metal foil (2) which is arranged over the felt mat (1), is impermeable to moisture, water and oils and has a thickness in a range of from 0.03 to 0.1 mm, and
- a fabric layer (4) which is arranged over the impermeable foil (2) and is a glass fibre fabric,
wherein the fabric layer (4) has a loss on ignition of less than 0.5 %, preferably of less than 0.1 %.

2. Pipe insulation according to claim 1, **characterised in that** the felt mat (1) is formed of alkaline earth silicate fibres.

3. Pipe insulation according to at least one of claims 1 and 2, **characterised in that** the impermeable foil (2) is an aluminium foil.

4. Pipe insulation according to at least one of claims 1 to 3, **characterised in that** the fabric layer (4) and the impermeable foil (2) are bonded together by means of a formaldehyde-free adhesive (3a) prior to assembly.

5. Pipe insulation according to at least one of claims 1 to 4, **characterised in that** a wire gauze (3b) is placed over the impermeable foil (2).

6. Pipe insulation according to at least one of claims 1 to 5, **characterised in that**, at a pipe connection between a first pipe (5a) and a second pipe (5b), a first piece of pipe insulation (10a) is arranged around the first pipe (5a) and a second piece of pipe insulation (10b) is arranged, at a spacing from the first pipe insulation, around the second pipe (5b), and a third piece of pipe insulation (10c) is arranged around the first and second pipe insulation (10a, b).

7. Use of a piece of pipe insulation according to at least one of claims 1 to 6 for exhaust pipes (5) which reach temperatures of over 400 °C.

8. Pipe (5), in particular an exhaust pipe, comprising a piece of pipe insulation (10) according to at least one of claims 1 to 7.

## Revendications

1. Isolation de tuyau (10), en particulier pour des tuyaux d'échappement chauds (5), comprenant :
- un feutre flexible (1) agencé en une ou plusieurs couches autour du tuyau (5) et constitué de fibres inorganiques,
- un film métallique mince (2) imperméable à l'humidité, à l'eau et aux huiles agencé sur le feutre (1), dont l'épaisseur est comprise dans une plage de 0,03 mm à 0,1 mm, et
- une couche tissée (4) de fibre de verre agencée par-dessus le film imperméable (2),
dans laquelle la couche tissée (4) présente une perte au feu inférieure à 0,5 % et préférablement inférieure à 0,1 %.

2. Isolation de tuyau selon la revendication 1, **caractérisée en ce que** le feutre (1) est constitué de fibres en silicate alcalino-terreux.

3. Isolation de tuyau selon au moins l'une des revendications 1 et 2, **caractérisée en ce que** le film imperméable (2) est un film en aluminium.

4. Isolation de tuyau selon au moins l'une des revendications 1 à 3, **caractérisée en ce que** la couche tissée (4) et le film imperméable (2) sont collés avant montage à l'aide d'un adhésif sans formaldéhyde (3a).

5. Isolation de tuyau selon au moins l'une des revendications 1 à 4, **caractérisée en ce qu'**une gaze (3b) est posée sur le film imperméable (2).

6. Isolation de tuyau selon au moins l'une des revendications 1 à 5, **caractérisée en ce que**, à une connexion de tuyau entre un premier tuyau (5a) et un deuxième tuyau (5b), une première isolation de tuyau (10a) est agencée autour du premier tuyau (5a) et une deuxième isolation de tuyau (10b) est agencée autour du deuxième tuyau (5b), espacée par rapport à la première isolation de tuyau, et une troisième isolation de tuyau (10c) est agencée autour des première et deuxième isolations de tuyau (10a, b).

7. Utilisation d'une isolation de tuyau selon au moins l'une des revendications 1 à 6 pour des tuyaux d'échappement (5) qui atteignent des températures supérieures à 400 °C.

8. Tuyau (5), en particulier tuyau d'échappement, avec une isolation de tuyau (10) selon au moins l'une des revendications 1 à 7.
